(19) Europäisches Patentamt
European Patent Office
Office européen des brevets

(11) EP 3 394 166 B1

(12) # FASCICULE DE BREVET EUROPEEN

(45) Date de publication et mention de la délivrance du brevet:
**12.02.2020 Bulletin 2020/07**

(21) Numéro de dépôt: **16829277.9**

(22) Date de dépôt: **22.12.2016**

(51) Int Cl.:
***C08L 15/00*** *(2006.01)* ***B60C 1/00*** *(2006.01)*
***C08C 19/00*** *(2006.01)* ***C08C 19/20*** *(2006.01)*
***C08C 19/25*** *(2006.01)*

(86) Numéro de dépôt international:
**PCT/FR2016/053647**

(87) Numéro de publication internationale:
**WO 2017/109427 (29.06.2017 Gazette 2017/26)**

(54) **PNEUMATIQUE COMPRENANT UNE COMPOSITION DE CAOUTCHOUC COMPRENANT UN ÉLASTOMÈRE DIÉNIQUE SUBSTITUÉ**

REIFEN ENTHALTEND EINE LATEXZUSAMMENSETZUNG ENTHALTEND EIN SUBSTITUIERTES DIEN-ELASTOMER

TIRE COMPRISING A RUBBER COMPOSITION COMPRISING A SUBSTITUTED DIENE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2015 FR 1563072**

(43) Date de publication de la demande:
**31.10.2018 Bulletin 2018/44**

(73) Titulaire: **Compagnie Générale des Etablissements Michelin**
**63000 Clermont-Ferrand (FR)**

(72) Inventeurs:
- **DRONET, Séverin**
  **63040 Clermont-Ferrand Cedex 9 (FR)**
- **PAVAGEAU, Corentin**
  **63040 Clermont-Ferrand Cedex 9 (FR)**
- **SCHNELL, Benoît**
  **63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 674 520** **EP-A1- 2 712 887**
**EP-A1- 2 765 145** **WO-A1-2012/059529**
**FR-A1- 3 000 073**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 394 166 B1

Printed by Jouve, 75001 PARIS (FR)

## Description

La présente invention se rapporte aux pneumatiques comprenant des compositions de caoutchouc destinées notamment à la fabrication de pneumatiques ou de produits semi-finis pour pneumatiques. L'invention est plus particulièrement relative aux systèmes plastifiants utilisables pour la plastification de telles compositions de caoutchouc.

Les compositions de caoutchouc pour pneumatiques comportent de manière connue des agents plastifiants utilisés pour améliorer la mise en oeuvre (ou "processabilité") desdites compositions à l'état cru ainsi que certaines de leurs propriétés d'usage à l'état cuit comme par exemple, dans le cas de bandes de roulement de pneumatiques, leur adhérence sur sol mouillé.

Dans des compositions de caoutchouc comprenant un élastomère diénique, divers plastifiants de différentes natures chimiques peuvent être ajoutés notamment pour déplacer la température de transition vitreuse (Tg) d'un élastomère.

Il est à noter que l'emploi d'un plastifiant peut conférer cependant des problèmes de compatibilité.

Les inventeurs proposent des pneumatiques comprenant des compositions de caoutchouc incorporant des élastomères diéniques comprenant des unités, réparties le long de la chaîne, portant un radical aliphatique jouant le rôle de plastifiant. Il a été constaté, de manière surprenante, que lorsque le plastifiant est greffé à une chaîne élastomère diénique, il est possible :

- d'augmenter la compatibilité du plastifiant, en particulier son impact sur la Tg du polymère et éviter la cristallisation du plastifiant par rapport au même plastifiant libre.
- d'éviter les phénomènes d'exsudation des plastifiants. Dans un pneumatique comprenant une composition de caoutchouc à base d'un élastomère diénique et d'un plastifiant, on peut observer des phénomènes d'exsudation des plastifiants vers l'extérieur du pneu ou vers les mélanges internes : ce qui diminue la quantité de plastifiant dans le matériau considéré, donc modifie ses performances dans le temps et cela peut aussi modifier les performances des autres postes dans lesquels le plastifiant va migrer.

Par ailleurs, la présence dans la composition de caoutchouc de plastifiant greffé à une chaîne élastomère diénique permet de conférer une endurance améliorée à une enveloppe de pneumatique incorporant dans sa bande de roulement cette composition de caoutchouc, du fait que la migration des plastifiants dans les mélanges adjacents de l'enveloppe est réduite, et, par conséquent, de minimiser l'altération des propriétés desdits mélanges, telles que leur rigidité et leur résistance à la fissuration, ce qui permet d'améliorer la résistance de l'enveloppe à la séparation des nappes sommet de triangulation qu'elle comporte dans son armature de sommet (cette résistance à la séparation des nappes est parfois appelée résistance au clivage par l'homme du métier).

I - Exposé de l'invention :

L'invention a pour objet un pneumatique comprenant une composition de caoutchouc comprenant un élastomère diénique substitué, caractérisé en ce que ledit élastomère diénique substitué comprend des unités portant un radical A- B, dans lequel :

- A représente un radical aliphatique en $C_3$-$C_{35}$, pouvant être interrompu par un ou plusieurs hétéroatome(s)
- B représente un radical hydrocarboné linéaire, ramifié ou cyclique en $C_1$-$C_6$

A et B sont tels que la température de fusion de l'analogue, H-A-B, soit inférieure à 70°C et l'élastomère diénique substitué comprend de 10 à 40 % en poids dudit radical A-B, par rapport au poids total de l'élastomère.

Avantageusement, A représente un radical en $C_{10}$-$C_{25}$, pouvant être interrompu par un ou plusieurs hétéroatome(s). En particulier, A représente un radical alkylène linéaire en $C_{10}$-$C_{25}$.

Avantageusement, B représente un radical méthyle, cyclopentyle ou cyclohexyle.

Le radical A-B peut être lié à la chaîne de l'élastomère par l'intermédiaire d'un atome de soufre ou d'un atome de silicium.

Dans une première variante, l'élastomère comprend des groupes pendants répartis le long de la chaîne de formule (1) suivante :

$$*\text{-SiR}_1\text{R}_2\text{-A-B}$$

avec

- $R_1$ et $R_2$, identiques ou différents, représentant chacun un groupement alkyle en $C_1$-$C_5$, aryle en $C_6$-$C_{14}$, alkyle aromatique en $C_7$-$C_{11}$
- A et B étant tels que définis précédemment;
- *désignant un point de liaison avec la chaîne élastomère.

Dans cette variante, l'élastomère diénique substitué est avantageusement obtenu par hydrosilylation d'un élastomère diénique E, en faisant réagir ledit élastomère diénique E avec un hydrogénosilane de formule (2) H-Si$R_1R_2$-A-B, où A, B, $R_1$ et $R_2$ sont tels que définis précédemment, en présence d'un catalyseur d'hydrosilylation.

Dans une deuxième variante, l'élastomère comprend des groupes pendants répartis le long de la chaîne de formule (3) suivante :

*-S-A-B

avec

- A et B étant tels que définis précédemment;
- *désignant un point de liaison avec la chaîne élastomère.

Dans cette variante, l'élastomère diénique substitué est avantageusement obtenu en faisant réagir un élastomère diénique E avec un thiol de formule (4) HS-A-B, où A et B sont tels que définis précédemment, en présence d'un amorceur radicalaire.

Dans l'une ou l'autre de ces variantes, l'élastomère diénique E est avantageusement l'un des polymères suivants :

(a) tout homopolymère obtenu par polymérisation d'un monomère diène conjugué ayant de 4 à 12 atomes de carbone;
(b) tout copolymère obtenu par copolymérisation d'un ou plusieurs des diènes conjugués, entre eux ou avec un ou plusieurs monomères éthyléniquement insaturés.
(c) tout homopolymère obtenu par polymérisation d'un monomère diène non conjugué ayant de 5 à 12 atomes de carbone,
(d) tout copolymère obtenu par copolymérisation d'un ou plusieurs des diènes non conjugués, entre eux ou avec un ou plusieurs monomères éthyléniquement insaturés.
(e) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone;
(f) un copolymère d'isobutène et d'isoprène (caoutchouc butyle), ainsi que les versions halogénées;
(g) le caoutchouc naturel;
(h) un copolymère oléfinique insaturé dont la chaine comporte au moins des unités monomériques oléfiniques et des unités diéniques;
(i) un mélange de plusieurs des élastomères définis de (a) à (h) entre eux.

En particulier, le monomère diène conjugué est le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène ou le 2,4-hexadiène.

Plus particulièrement, l'élastomère diénique E est choisi parmi

- les polybutadiènes (en abrégé "BR"),
- les polyisoprènes (IR) de synthèse,
- le caoutchouc naturel (NR),
- les copolymères statistiques de butadiène, les copolymères statistiques d'isoprène, les copolymères statistiques d'éthylène-diène, plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les copolymères d'éthylène-butadiène (EBR), et
- les mélanges de ces élastomères

La composition de caoutchouc comprend avantageusement de 50% à 70 % en masse de l'élastomère substitué selon l'invention.

La composition de caoutchouc comprend avantageusement de 45 à 160 pce de charge renforçante.

La composition de caoutchouc comprend avantageusement également un deuxième élastomère diénique.

En particulier, la composition de caoutchouc selon l'invention compose la bande de roulement.

L'invention a également pour objet une bande de roulement comprenant une composition de caoutchouc selon l'invention.

L'invention a également pour objet une composition de caoutchouc comprenant un élastomère diénique substitué selon l'invention et au moins l'un des constituants suivants :

- un deuxième élastomère diénique ;
- une charge renforçante, et le cas échéant un agent de couplage.

II - Descriptif des méthodes de mesure utilisées et définitions

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a à b (c'est-à-dire incluant les bornes strictes a et b).

Dans la présente description, sauf indication expresse différente, tous les pourcentages (%) indiqués sont des pourcentages en masse.

Par ailleurs, le terme « pce » signifie au sens de l'invention, partie en poids pour cent parties d'élastomère total. Lorsque l'élastomère est greffé, on prend en considération le poids de l'élastomère et du greffon.

Dans la présente description, par l'expression « le long de la chaîne » en se référant aux unités comprenant le radical de formule A-B, il faut entendre que l'élastomère comprend des unités de ce type en plusieurs endroits de la chaîne élastomère. Ceci inclut la ou les extrémités de la chaîne mais ne se limite pas à ces emplacements. Lorsqu'une unité comprenant le radical de formule A-B est présente en au moins une extrémité de chaîne, l'élastomère comprend également au moins une autre unité de ce type en une autre position dans la chaîne.

Dans la présente description, par l'expression « greffon », il faut entendre le bloc latéral comprenant le radical de formule A-B, défini par la suite, introduit sur le tronc de l'élastomère par greffage.

Par ailleurs, par l'expression « élastomère substitué », il faut entendre un élastomère comprenant des unités portant ledit radical A-B.

Par l'expression composition "comprenant" ou « à base de », il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans le cadre de l'invention, on peut utiliser des produits carbonés issus de la biomasse ou issus d'une origine non renouvelable (fossile). Ainsi, les produits carbonés sont d'origine fossile ou bio-sourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

• Chromatographie d'exclusion stérique

Préparation du polymère: Il n'y a pas de traitement particulier de l'échantillon de polymère avant analyse. Celui-ci est simplement solubilisé, dans du tétrahydrofurane avec 1%vol. d'eau distillée, à une concentration d'environ 1 g/L. Puis la solution est filtrée sur filtre de porosité 0,45μm avant injection.

L'appareillage utilisé est un chromatographe « WATERS alliance ». Le solvant d'élution est du tétrahydrofurane. Le débit est de 0,7 mL/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 μL. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

• Microstructure et taux de greffon par RMN

Les déterminations des taux des différentes unités monomères et de la microstructure du copolymère sont réalisées par une analyse RMN. Les spectres sont acquis sur un spectromètre 500 MHz BRUKER équipé d'une sonde " Broad Band " BBIz-grad 5 mm. L'expérience RMN 1H quantitative, utilise une séquence simple impulsion 30° et un délai de répétition de 5 secondes entre chaque acquisition. Les échantillons sont solubilisés dans le $CDCl_3$.

• Analyse DSC : mesure de Tg, de l'enthalpie de fusion et de la température de fusion

Les températures de fusion, enthalpies de fusion et températures de transition vitreuse Tg des polymères sont mesurées au moyen d'un calorimètre différentiel ("differential scanning calorimeter"). L'analyse est réalisée selon les requis de la norme ASTM D3418-08 et la norme ISO 11357-3 :2011.

La même méthode (norme ASTM D3418-08 et la norme ISO 11357-3 :2011) est utilisée pour déterminer la température de fusion du composé H-A-B, défini ci-après.

• Mesure de la rigidité (G*)

Les propriétés viscoélastiques linéaires de ces matériaux sont mesurées par cisaillement sinusoïdale de faible déformation (0,1%). Les mesures sont conduites sur un rhéomètre MCR301 (Anton Paar) à déformation imposée avec une géométrie plan-plan parallèle (20 mm de diamètre). Les expériences sont conduites sous atmosphère d'azote. Les échantillons sont moulés à 100°C (diamètre 25mm, épaisseur environ 2mm) pendant 5 minutes, puis découpés à un diamètre de 20mm avec un emporte-pièce. Le module de conservation élastique G', le module visqueux G" et le facteur de perte tan$\delta$ sont mesurés lors d'un balayage en température à 5°C/min entre -60°C et 100°C. Le rhéomètre est calibré et les échantillons sont chargés avec précaution pour assurer des résultats reproductibles, en suivant les recommandations décrites dans Macosko CW. Rheology : principles measurement and applications. New York : Wiley-VCH ; 1994.

III - Description détaillée de l'invention :

L'invention a pour objet un pneumatique comprenant une composition de caoutchouc comprenant un élastomère diénique substitué, caractérisé en ce que ledit élastomère diénique substitué comprend des unités portant un radical A- B, dans lequel :

- A représente un radical aliphatique en $C_3$-$C_{35}$, pouvant être interrompu par un ou plusieurs hétéroatome(s)
- B représente un radical hydrocarboné linéaire, ramifié ou cyclique en $C_1$-$C_6$

A et B sont tels que la température de fusion de l'analogue, H-A-B, soit inférieure à 70°C et l'élastomère diénique substitué comprend de 10 à 40 % en poids dudit radical A-B, par rapport au poids total de l'élastomère.

Ainsi, la composition de caoutchouc est à base d'un élastomère diénique substitué selon l'invention et des éventuels autres composés décrits par la suite.

III.1. Elastomère diénique substitué

Un radical aliphatique désigne un radical hydrocarboné linéaire ou ramifié ou cyclique ou pouvant comprendre un ou plusieurs cycles, saturé ou insaturé. Le radical hydrocarboné peut être un radical alkylène, alcénylène, alcynylène, alkyle, alcènyle ou alcynyle linéaire, ramifié ou cyclique. Par le terme « cyclique », on entend, au sens de la présente invention, que le radical comprend un ou plusieurs groupements hydrocarbonés saturés divalents cycliques, comportant chacun de 3 à 8 atomes de carbone cycliques, avantageusement à l'exception du groupement époxyde. Dans le cas du radical A, le radical hydrocarboné peut en outre contenir un ou plusieurs hétéroatomes, tels que par exemple N, O ou Si. Dans le cas du radical B, le radical hydrocarboné ne comprend que des atomes de carbone et d'hydrogène.

Dans une variante avantageuse, aucun des radicaux A ou B ne comprend un cycle époxyde.

Selon un mode de réalisation préféré, le radical A est un radical alkylène linéaire, ramifié ou cyclique en $C_{10}$-$C_{25}$, pouvant être interrompu par un ou plusieurs hétéroatome(s), tels que par exemple N, O ou Si. En particulier, A représente un radical alkylène linéaire en $C_{10}$-$C_{25}$.

B représente avantageusement un radical méthyle, cyclopentyle ou cyclohexyle.

Le composé H-A-B a une température de fusion inférieure à 70°C, avantageusement inférieure à 50°C.

Avantageusement, le radical A-B est lié à la chaîne de l'élastomère par l'intermédiaire d'un atome de soufre ou d'un atome de silicium.

Dans une première variante, l'élastomère comprend des groupes pendants répartis le long de la chaîne de formule (1) suivante :

$$*\text{-SiR}_1\text{R}_2\text{-A-B}$$

avec

- $R_1$ et $R_2$, identiques ou différents, représentant chacun un groupement alkyle en $C_1$-$C_5$, aryle en $C_6$-$C_{14}$, alkyle aromatique en $C_7$-$C_{11}$
- A et B étant tels que définis précédemment;
- *désignant un point de liaison avec la chaîne élastomère.

Selon des variantes, dans la formule (1), $R_1$ et $R_2$, identiques ou différents, désignent de préférence un groupement alkyle en $C_1$-$C_5$. En particulier, $R_1$ et $R_2$, identiques ou différents, représentent chacun un groupement méthyle ou éthyle.

Dans cette première variante, l'élastomère diénique substitué est avantageusement obtenu par hydrosilylation d'un élastomère diénique E, en faisant réagir ledit élastomère diénique E avec un hydrogénosilane de formule (2) suivante :

$$H\text{-}SiR_1R_2\text{-}A\text{-}B,$$

où A, B, $R_1$ et $R_2$ sont tels que définis précédemment, en présence d'un catalyseur d'hydrosilylation.

Ainsi, selon l'invention, l'hydrogénosilane de formule (2) réagit par hydrosilylation sur les insaturations d'un élastomère diénique insaturé E.

Dans une deuxième variante, l'élastomère comprend des groupes pendants répartis le long de la chaîne de formule (3) suivante :

*-S-A-B

avec

- A et B étant tels que définis précédemment;
- *désignant un point de liaison avec la chaîne élastomère.

Dans cette deuxième variante, l'élastomère diénique substitué est avantageusement obtenu en faisant réagir un élastomère diénique E avec un thiol de formule (4) HS-A-B, où A et B sont tels que définis précédemment, en présence d'un catalyseur d'un amorceur radicalaire.

Ainsi, selon l'invention, le thiol de formule (4) réagit par thiol/ène réaction sur les insaturations d'un élastomère diénique insaturé E.

Dans l'une ou l'autre de ces variantes, par élastomère diénique, doit être compris selon l'invention tout élastomère issu au moins en partie (i.e., un homopolymère ou un copolymère) de monomères diènes (monomères porteurs de deux doubles liaisons carbone-carbone, conjuguées ou non). L'élastomère diénique E selon l'invention comporte des insaturations de type double liaison carbone-carbone. L'élastomère E selon l'invention présente de préférence entre autres insaturations, des insaturations pendantes le long de la chaîne. Selon certaines variantes, ces insaturations pendantes sont des insaturations dites d'origine vinylique. On appelle insaturations d'origine vinylique, des insaturations pendantes de la chaîne polymérique provenant d'une insertion de type vinylique du monomère diénique dans l'élastomère. À titre d'exemples d'insaturations d'origine vinylique, on peut citer celles provenant d'une insertion de type 1,2- par exemple du butadiène, de l'isoprène ou tout autre diène possédant une insaturation en C1 (c'est-à-dire tout autre diène dont une des doubles liaisons est terminale), ou encore d'insertions de type 3,4- de l'isoprène par exemple...

Selon des variantes préférentielles, convient selon l'invention à titre d'élastomère E, tout élastomère diénique comprenant au moins des unités insaturées dont une partie est issue d'une insertion du monomère diène, conjugué ou non, conduisant à une insaturation pendante, notamment, selon certaines de ces variantes, tout élastomère diénique comprenant au moins des unités insaturées dont une partie est issue d'une insertion vinylique.

En particulier, l'élastomère diénique insaturé E selon l'invention comporte des insaturations pendantes le long de la chaîne. Le taux massique des unités monomériques porteuses de ces insaturations, unités notées F, varie alors dans un domaine permettant d'atteindre le taux massique en groupes pendants de formule (I) recherché, étant noté que la modification des insaturations peut être quantitative par la réaction d'hydrosilylation ou par la réaction thio/ène en présence d'un excès de thiol. Dans ces variantes, les élastomères diéniques appropriés pour être mis en oeuvre dans le procédé de l'invention sont ceux pour lesquels le taux massique d'unités monomériques insaturées F répond à la formule suivante :

$$\%F \geq \%G \times M(F)/M(G)$$

Où

%F désigne le pourcentage en poids d'unités monomériques insaturées F, par rapport au poids total de l'élastomère E,

%G désigne le pourcentage en poids de groupes de formule (2) ou (4) que l'on souhaite introduire, par rapport au poids total de l'élastomère E,

M(G) désigne la masse molaire du groupe de formule (2) ou (4)

M(F) désigne la masse molaire de l'unité monomèrique insaturée F.

Les élastomères diéniques appropriés pour être mis en oeuvre dans le procédé de l'invention peuvent également être fortement insaturés, avec un taux massique d'unités monomériques insaturées supérieur à 20% et pouvant atteindre 100% par rapport à la masse totale de l'élastomère.

On entend plus particulièrement par élastomère diénique susceptible d'être utilisé dans l'invention, un polymère diénique, qui est un élastomère, correspondant à l'une des catégories suivantes:

(a) tout homopolymère obtenu par polymérisation d'un monomère diène conjugué ayant de 4 à 12 atomes de carbone;

(b) tout copolymère obtenu par copolymérisation d'un ou plusieurs des diènes conjugués cités plus haut, entre eux ou avec un ou plusieurs monomères éthyléniquement insaturés;

(c) tout homopolymère obtenu par polymérisation d'un monomère diène non conjugué ayant de 5 à 12 atomes de carbone;

(d) tout copolymère obtenu par copolymérisation d'un ou plusieurs des diènes non conjugués cités plus haut, entre eux ou avec un ou plusieurs monomères éthyléniquement insaturés;

(e) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué tels que décrits en particulier dans les documents WO 2004/035639A1 et US 2005/0239639A1;

(f) un copolymère d'isobutène et d'isoprène (caoutchouc butyle), ainsi que les versions halogénées, en particulier chlorées ou bromées, de ce type de copolymère;

(g) le caoutchouc naturel;

(h) un copolymère oléfinique insaturé dont la chaine comporte au moins des unités monomériques oléfiniques, c'est à dire des unités issues de l'insertion d'au moins une mono-oléfine, et des unités diéniques issues d'au moins un diène conjugué.

(i) un mélange de plusieurs des élastomères définis de (a) à (h) entre eux.

A titre de monomère diène conjugué approprié pour la synthèse des polymères (a), (b) et (h), on peut citer le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de monomère diène non conjugué approprié pour la synthèse des polymères (c), (d) et (e), on peut citer le pentadiène-1,4, l'hexadiène-1,4, l'éthylidène norbornène, le dicyclopentadiène;

A titre de monomères éthyléniquement insaturés susceptibles d'intervenir dans la copolymérisation avec un ou plusieurs monomères diéniques, conjugué ou non, pour synthétiser les copolymères (b) ou (d), on peut citer:

- les composés vinylaromatiques ayant de 8 à 20 atomes de carbone, comme par exemple le styrène, l'ortho-, méta-, para-méthylstyrène, le mélange commercial vinylmésitylène, le divinylbenzène, le vinylnaphtalène;
- les monomères nitriles vinyliques ayant 3 à 12 atomes de carbone, comme par exemple l'acrylonitrile, le méthacrylonitrile;
- les monomères esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle;

Les copolymères (b) ou (d) peuvent contenir entre 99% et 1% massique d'unités diéniques et entre 1% et 99% massique d'unités vinylaromatiques, nitriles vinyliques et/ou esters acryliques.

A titre de monomère mono-oléfine approprié pour la synthèse des polymères (h), on peut citer l'éthylène, une $\alpha$-oléfine ayant 3 à 6 atomes de carbone, par exemple le propylène. Préférentiellement, le monomère mono-oléfine est l'éthylène.

Selon certaines variantes, le copolymère oléfinique (h) susceptible d'être utilisé dans le procédé de l'invention, est un copolymère dont la chaine comporte des unités monomériques oléfiniques, c'est à dire des unités issues de l'insertion d'au moins une mono-oléfine, et des unités diéniques issues d'au moins un diène conjugué. Selon ces variantes,

d'autres unités issues par exemple d'un monomère éthyléniquement insaturé tel que décrit plus haut, sont présentes dans la chaine carbonée.

Selon certaines variantes, les unités monomériques oléfiniques dans le polymère (h) sont majoritaires, plus préférentiellement, le taux molaire de ces unités est supérieur à 50% par rapport au polymère. Parmi ces variantes, le taux molaire peut être d'au moins 65%. De tels élastomères et leurs procédés de synthèse sont décrits dans les demandes EP 1 092 731, EP 1 554 321, EP 1 656 400, EP 1 954 705, EP 1 957 506 et FR 13/50557 au nom des Demanderesses.

Parmi les élastomères diéniques issus d'au moins un monomère diène conjugué utilisés dans le cadre du procédé de modification selon l'invention, on peut citer comme exemples non exclusifs, le polybutadiène, le polyisoprène, le polychloroprène, le polyisobutylène, les copolymères statistiques du butadiène avec le styrène (SBR) et l'acrylonitrile (NBR) et leurs versions partiellement hydrogénés, les copolymères statistiques de l'isoprène avec le styrène (SIR), les copolymères statistiques de l'isoprène et du butadiène avec le styrène (SBIR), les caoutchoucs butyle ou halogénés, les terpolymères d'éthylène-propylène-diène (EPDM), les copolymères d'éthylène-diène ainsi que leurs mélanges.

Parmi ceux-ci, le ou les élastomères diéniques utilisés dans l'invention sont tout particulièrement choisis dans le groupe des polymères diéniques constitué par les polybutadiènes (en abrégé "BR"), les polyisoprènes (IR) de synthèse, le caoutchouc naturel (NR), les copolymères de butadiène, les copolymères d'isoprène, les copolymères d'éthylène-diène et les mélanges de ces polymères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les copolymères d'éthylène-butadiène (EBR).

Les élastomères utilisables selon l'invention peuvent être obtenus selon des techniques classiques de polymérisation bien connues de l'homme du métier. Les élastomères ont avantageusement une microstructure statistique. Les élastomères peuvent être préparés en dispersion, en émulsion ou en solution.

Les élastomères diéniques substitués utilisés dans l'invention peuvent être préparés par réaction d'un élastomère diénique E, tel que défini précédemment, avec un hydrogénosilane de formule (2) ou avec un thiol de formule (4), tel que défini précédemment, en présence respectivement d'un catalyseur d'hydrosilylation ou d'un amorceur radicalaire.

Préalablement à la réaction de greffage par hydrosilylation, le procédé comprend avantageusement la mise en solution dans un solvant apolaire d'au moins un élastomère diénique insaturé E, un hydrogénosilane de formule (2) et un catalyseur d'hydrosilylation. Cette solubilisation peut se faire selon toute mise en oeuvre à la disposition de l'homme du métier. Selon une mise en oeuvre, l'élastomère insaturé, l'hydrogénosilane de formule (2) et le catalyseur sont mis en solution dans le solvant apolaire sous agitation.

A titre de solvant apolaire, on peut utiliser tout solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges. A titre préférentiel, on utilise le méthylcyclohexane ou le toluène.

A titre de catalyseur, on peut utiliser, tout catalyseur connu pour la catalyse de l'hydrosilylation à base de métaux de transition généralement du groupe VIII tels que le platine, le palladium, le rhodium, le ruthénium, le fer, etc.... Parmi ces différents catalyseurs employés pour la réaction d'hydrosilylation, on choisira préférentiellement les catalyseurs à base de platine tels que l'acide hexachloroplatinique hexahydraté (catalyseur de Speier) et le catalyseur platine-1,1,3,3-tétraméthyl-1,3-divinylsiloxane (catalyseur de Karstedt) et plus préférentiellement le catalyseur de Karstedt. Le catalyseur pourra être ajouté au mélange réactionnel sous toute forme usuelle, toutefois, de préférence, sous forme d'une solution dans un solvant.

De préférence, la quantité de solvant total, ou de solvant du milieu réactionnel, est telle que la concentration massique en élastomère est comprise entre 1 et 40% en masse, de préférence entre 2 et 20% et encore plus préférentiellement entre 2 et 10% dans ledit solvant. On entend par solvant total, ou solvant du milieu réactionnel, l'ensemble des solvants utilisés pour solubiliser l'élastomère insaturé, l'hydrogénosilane de formule (2) et le catalyseur d'hydrosilylation.

Le procédé selon l'invention peut avantageusement comprendre une étape de chauffage du mélange réactionnel homogène obtenu à l'étape précédente à la température de la réaction de greffage. La température de réaction de greffage est au moins 20°C et au plus 120°C, de préférence elle est d'au moins 50°C, voire au moins 60°C et au plus 100°C, voire au plus 90°C.

Préalablement à la réaction de greffage par thiol/ène réaction, le procédé comprend avantageusement la mise en solution dans un mélange comprenant au moins un solvant polaire et au moins un solvant apolaire d'au moins un élastomère diénique insaturé E, un thiol de formule (4) et un amorceur radicalaire. Cette solubilisation peut se faire selon toute mise en oeuvre à la disposition de l'homme du métier. Selon une mise en oeuvre, l'élastomère insaturé, le thiol de formule (4) et l'amorceur radicalaire sont mis en solution dans le mélange comprenant au moins un solvant polaire et au moins un solvant apolaire sous agitation.

Cette mise en solution peut se faire selon toute mise en oeuvre à la disposition de l'homme du métier. Selon une mise en oeuvre, l'élastomère est mis en solution dans le solvant apolaire et est mélangé sous agitation au thiol de

formule (4) mis en solution dans le solvant polaire. Ou inversement, le thiol de formule (4) en solution dans le solvant polaire est mélangé à l'élastomère en solution dans le solvant apolaire sous agitation.

Le solvant est constitué d'un mélange comprenant au moins un solvant polaire et au moins un solvant apolaire. De préférence, le solvant polaire et le solvant apolaire sont miscibles.

A titre de solvant apolaire, on peut utiliser tout solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges. A titre préférentiel, on utilise le méthylcyclohexane ou le toluène.

A titre de solvant polaire, on peut utiliser tout solvant polaire tel qu'un composé azoté de type aminé ou hétérocycle azoté, une cétone, un sulfoxyde, un éther, solvant halogéné de type chloroforme, dichlorométhane, dichloroéthane, tétrachloroéthane, etc., ainsi que leurs mélanges. De préférence, on utilise du dichlorométhane ou du THF (tetrahydrofurane).

Le procédé comprend avantageusement une étape de chauffage du mélange réactionnel homogène obtenu à l'étape précédente à la température de la réaction de greffage. La température de réaction de greffage est au moins 20°C et au plus 120°C, de préférence elle varie de 50°C à 100°C et encore plus préférentiellement de 60°C à 90°C.

Le procédé selon l'invention comprend avantageusement une fois la température de la réaction de greffage atteinte, l'étape d'adjonction d'un amorceur radicalaire pour entraîner le greffage du thiol de formule (4) sur les motifs de l'élastomère comportant des insaturations. A titre d'amorceur radicalaire, on peut utiliser selon l'invention, tout amorceur connu de l'homme du métier. On peut citer, par exemple, l'azobisisobutyronitrile ou encore les peroxydes, sachant que, la nature du peroxyde n'ayant aucun impact sur le rendement de greffage, tous les peroxydes sont envisageables. L'amorceur radicalaire pourra être ajouté au mélange réactionnel sous toute forme usuelle, toutefois, de préférence, sous forme d'une solution dans un solvant. De préférence, le solvant de l'amorceur radicalaire est identique à l'un au moins des solvants utilisés pour solubiliser le thiol de formule (4) et l'élastomère diénique. A titre d'un tel solvant, on peut ainsi citer le méthylcyclohexane, le tetrahydrofurane, le dichlorométhane.

L'utilisation d'un mélange de solvants polaires et apolaires permet d'améliorer le rendement du greffage. Le solvant du milieu réactionnel, à savoir le mélange des solvants polaires et apolaires y compris le solvant de l'amorceur radicalaire, comprend avantageusement au plus 60% en volume de solvant polaire par rapport au volume de solvant apolaire. En-dessous de cette valeur, le rendement de greffage permet de réduire significativement les inconvénients liés à la présence de thiols n'ayant pas réagi. Par exemple, la quantité de solvant polaire peut être comprise entre 0 et 60% en volume par rapport au volume total de solvant apolaire. En outre, la quantité de solvant polaire par rapport au mélange de solvants est de préférence d'au plus 40% en volume par rapport au volume total de solvant apolaire, valeur en-dessous de laquelle on peut atteindre un rendement quantitatif. Selon un autre aspect préférentiel combinable avec les aspects précédents, le solvant comprend au moins 4% en volume de solvant polaire par rapport au volume total de solvant apolaire. Par exemple, la quantité de solvant polaire peut varier de 4 à 60% en volume par rapport au volume total de solvant apolaire, de préférence de 4 à 40% en volume.

De préférence, la quantité de solvant total, ou de solvant du milieu réactionnel, est telle que la concentration massique en élastomère est comprise entre 1 et 40% en masse, de préférence entre 2 et 20% et encore plus préférentiellement entre 2 et 10% dans ledit solvant.

Dans l'une ou l'autre des réactions de greffage, le taux de greffage peut être ajusté de manière connue pour l'homme du métier, en faisant varier différentes conditions opératoires, telles que notamment la quantité de molécules à greffer, la température ou encore le temps de réaction. Il est possible d'atteindre des rendements de greffage quantitatifs, aussi bien pour le greffage par hydrosilylation que pour le greffage par thiol/ène réaction.

Il convient de noter que dans le cadre de l'invention les variantes et les aspects préférentiels décrits plus haut sont combinables entre eux.

Dans l'une ou l'autre des réactions de greffage, en fin de réaction, on peut ajouter des antioxydants. A titre d'antioxydant, on peut notamment citer les antioxydants phénoliques comme le 4,4'-méthylène-bis-2,6-tert-butylphénol, et les antioxydants aminés comme le N-(1,3-diméthylbutyl)-N'-phényl-p-phénylènediamine.

La composition de caoutchouc comprend avantageusement au moins 30% en poids de l'élastomère diénique substitué selon l'invention, préférentiellement au moins 40% en poids, par rapport au poids total de la composition. Avantageusement, la composition de caoutchouc comprend de 30% à 70% en poids de l'élastomère diénique substitué selon l'invention, plus de 40 % à 70% en poids, par rapport au poids total de la composition.

Les élastomères diéniques substitués selon l'invention peuvent être utilisés en tant que tel ou en mélanges avec un ou plusieurs autres composés. La présence de radicaux A-B pendants le long de la chaîne permet :

- d'augmenter la compatibilité du plastifiant en particulier son impact sur la Tg du polymère et éviter la cristallisation du plastifiant par rapport au même plastifiant libre.
- d'éviter l'exsudation des plastifiants vers l'extérieur du pneu ou vers les mélanges internes : ce qui modifie la quantité de plastifiant dans le matériau considéré donc réduit ses performances dans le temps et cela peut aussi modifier

les performances des autres postes dans lesquels le plastifiant va migrer.

Dans le pneumatique, la composition de caoutchouc peut également comprendre un deuxième élastomère diénique.

Le taux du premier élastomère diénique (l'élastomère diénique substitué) est avantageusement compris dans un domaine allant de 50 à 100 pce, préférentiellement de 60 à 100 pce, encore plus préférentiellement de 80 à 100 pce, préférentiellement de 100 pce. Lorsque la composition de caoutchouc du pneumatique conforme à l'invention comporte un deuxième élastomère diénique, optionnel, cet élastomère est différent du premier élastomère diénique dans la mesure où il ne porte pas de radical A- B. Néanmoins ce deuxième élastomère diénique peut avoir une microstructure ou une macrostructure qui peut être identique à ou différente de celle de l'élastomère diénique insaturé E. Il est utilisé dans une proportion allant de 0 à 50 pce, préférentiellement de 0 à 40 pce, encore plus préférentiellement de 0 à 20 pce.

III.2. Charge renforçante :

Dans le pneumatique, la composition de caoutchouc comprend avantageusement une charge renforçante.

La composition de caoutchouc peut comporter tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 m2/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

A titre de charge inorganique renforçante, on citera également les charges minérales du type alumineuse, en particulier de l'alumine ($Al_2O_3$) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Dans le présent exposé, la surface spécifique BET est déterminée de manière connue par adsorption de gaz

à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB est la surface externe déterminée selon la norme française NF T 45-007 de novembre 1987 (méthode B).

De manière préférentielle, le taux de charge renforçante totale est compris entre 45 et 160 pce. Au-delà de 160 pce, il existe un risque d'augmentation de l'hystérèse et donc de la résistance au roulement des pneumatiques.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Bien entendu pourraient être également utilisés des mélanges des agents de couplage précédemment décrits, comme décrit notamment dans la demande WO 2006/125534 précitée.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

III.3. Additifs divers :

Les compositions de caoutchouc conformes à l'invention peuvent également contenir des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou $H_3M$) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30°C, telles que décrites par exemple dans les demandes WO 2005/087859, WO 2006/061064 et WO 2007/017060,

et les mélanges de tels composés.

La composition de caoutchouc selon l'invention est fabriquée de manière connue en soi dans des mélangeurs appropriés.

III.4. Fabrication de la composition de caoutchouc :

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour préparer la composition de caoutchouc conforme à l'invention comprend avantageusement les étapes suivantes :

- incorporer à l'élastomère diénique, au cours d'une première étape dite non productive, les autres ingrédients de la composition, dont la charge renforçante, à l'exception du système de réticulation en malaxant thermomécaniquement le tout jusqu'à atteindre une température maximale comprise entre 110 et 190°C ;
- refroidir l'ensemble à une température inférieure à 100°C ;
- incorporer ensuite, au cours d'une seconde étape dite productive un système de réticulation ;
- malaxer le tout jusqu'à une température maximale inférieure à 110°C.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique.

Dans le pneumatique selon l'invention, la composition de caoutchouc décrite précédemment compose avantageusement la bande de roulement.

L'invention a également pour objet un produit semi-fini en caoutchouc, avantageusement une bande de roulement, comprenant une composition de caoutchouc telle que décrite précédemment.

Un autre objet de l'invention est une composition comprenant l'élastomère diénique substitué tel que décrit plus haut ou préparé par hydrosilylation ou par thiol/ène réaction selon le procédé décrit plus haut et au moins l'un des constituants suivants :

- un deuxième élastomère diénique ;
- une charge renforçante, et le cas échéant un agent de couplage.

Cette composition est avantageusement une composition de caoutchouc réticulable.

Le deuxième élastomère diénique et la charge renforçante sont tels que décrits précédemment.

Les caractéristiques précitées de la présente invention, ainsi que d'autres, seront mieux comprises à la lecture de la description suivante de plusieurs exemples de réalisation de l'invention, donnés à titre illustratif et non limitatif.

**Exemple**

**Procédés de greffage et propriétés des élastomères greffés**

L'élastomère de départ est soumis à un traitement antioxydant par addition de 0,4 partie pour cent parties d'élastomères (pce) de 4,4'-méthylène-bis-2,6-tert-butylphénol et de 0,4 partie pour cent parties d'élastomères (pce) de N-(1,3-diméthylbutyl)-N'-phényl-p-phénylènediamine.

Les élastomères greffés ont été synthétisés en solution par 2 types de réaction chimique :

- par hydrosilylation. :

10 g de SBR sont mis en solution dans 250 mL de toluène dans un réacteur de 500 mL équipé d'une agitation mécanique, le tout est placé sous atmosphère inerte (azote). Pour ESi1 : 13 mmol (4,1 g) de $H\text{-}Si(CH_3)_2\text{-}(C_{18}H_{37})$ et 200 $\mu$L de platine-1,1,3,3-tetraméthyl-1,3-divinylsiloxane en solution dans le xylène (catalyseur de Karstedt) (n°CAS : 68478-92-2) sont ajoutés à la solution de polymère et le milieu réactionnel est chauffé à 60 °C.

Pour ESi2 : 26mmol (8,2g) de $H\text{-}Si(CH_3)_2\text{-}(C_{18}H_{37})$ et 400 $\mu$L de platine-1,1,3,3-tetraméthyl-1,3-divinylsiloxane en solution dans le xylène (catalyseur de Karstedt) (n°CAS : 68478-92-2) sont ajoutés à la solution de polymère et le

milieu réactionnel est chauffé à 60 °C.

Pour les deux élastomères :

Après 24h à 60 °C sous agitation, on laisse le milieu réactionnel revenir à température ambiante. Une fois revenu à température ambiante, le milieu réactionnel est ensuite coagulé dans 250 mL de méthanol.

L'élastomère remis en solution subit ensuite un traitement anti-oxydant de 0,4 partie pour cent parties d'élastomères (pce) de 4,4'-méthylène-bis-2,6-tert-butylphénol et de 0,4 partie pour cent parties d'élastomères (pce) de N-(1,3-diméthylbutyl)-N'-phényl-p-phénylènediamine.

Le SBR modifié est séché par étuvage sous vide (200 torr) à 60 °C pendant 1 jour.

Le suivi de la réaction est effectué par spectroscopie RMN$^1$H et confirmé par la réduction ou la disparition des signaux des insaturations vinyliques ($\delta$ = 4,9 ppm : =$CH_2$). Le rendement de greffage est de de 67% pour ESi1, respectivement 47% pour ESi2. Le rendement de greffage est la quantité en poids de dérivé hydrogénosilane greffé par rapport à la quantité en poids d'hydrogénosilane introduit.

- par réaction thiol/ène (ES1) :

10 g de SBR sont mis en solution dans 250 mL de methylcyclohexane dans un réacteur de 500 mL équipé d'une agitation mécanique, le tout est placé sous atmosphère inerte (azote).

29 mmol (8,3 g) de $C_{18}H_{37}SH$ sont mis en solution dans 56 mL de dichloromethane. 0,18 g de peroxyde de lauroyle sont mis en solution dans 30 mL de methylcyclohexane. Les solutions de thiol et d'amorceur sont ajoutées à la solution de polymère et le milieu réactionnel est chauffé à 80 °C.

Après 24 heures à 80 °C sous agitation, on laisse le milieu réactionnel revenir à température ambiante. Une fois revenu à température ambiante, le milieu réactionnel est ensuite coagulé dans 250 mL de méthanol puis rincé avec 250 mL de méthanol. L'élastomère remis en solution subit ensuite un traitement anti-oxydant de 0,4 partie pour cent parties d'élastomères (pce) de 4,4'-méthylène-bis-2,6-tert-butylphénol et de 0,4 partie pour cent parties d'élastomères (pce) de N-(1,3-diméthylbutyl)-N'-phényl-p-phénylènediamine.

Le SBR substitué est séché par étuvage sous vide (200 torr) à 60 °C pendant 1 jour.

Le suivi de la réaction est effectué par spectroscopie RMN$^1$H et confirmé par la réduction ou la disparition des signaux des insaturations vinyliques ($\delta$ = 4,9 ppm : =$C\mathbf{H_2}$). Le rendement de greffage est de 20% pour ES1. Le rendement de greffage est la quantité de dérivé thiol greffé par rapport à la quantité de thiol introduit.

4 élastomères sont étudiés :
TE = élastomère styrène-butadiène (SBR) non modifié,
ES1 : SBR greffé par réaction thiol/ène
ESi1, ESi2 : SBR greffés par hydrosilylation selon un taux de greffage indiqué dans le tableau suivant :

Tableau 1

| | **TE** | **ESi1** | **ESi2** | **ES1** |
|---|---|---|---|---|
| greffon | Aucun | $C_{18}H_{37}Si^*(CH_3)_2$ | | $C_{18}H_{37}S^*$ |
| *% massique Styrène* | 29,1 | 22,9 | 21,1 | 24,2 |
| *% massique PB* | 70,9 | 51,9 | 46,5 | 55.6 |
| *% massique unités greffées* | 0 | 3,7 | 4,7 | 3,2 |
| *% massique de greffon* | 0 | 21,5 | 27,7 | 17,0 |

% massique unités greffées = unités PB1,2 après réaction d'hydrosilylation mais sans le poids du greffon, c'est-à-dire de formule :

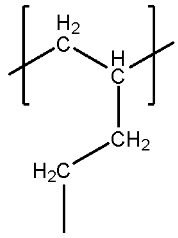

% massique de groupe pendant (I) = (% en poids du plastifiant de formule (I) / (% en poids du plastifiant de formule (I) + % en poids du SBR avant greffage)

Des mélanges témoins sont réalisés à partir de SBR non greffés et de plastifiants libres selon les proportions massiques données dans le tableau suivant (% massique de plastifiant = % en poids du plastifiant / (% en poids du plastifiant + % en poids du SBR non greffé)).

Dans tous ces mélanges témoins, le SBR présente la même répartition en unités styrène, en unités butadiène (PB) que celle indiquée pour le SBR dans le tableau 1. Les formulations des mélanges témoins (TS1, TSi1, TSi2, TPS, TPSi) sont données dans le tableau suivant :

Tableau 2

| *Nom* | **TSi1** | **TSi2** | **TPSi** | **TS1** | **TPS** |
|---|---|---|---|---|---|
| *Plastifiant* | $C_{18}H_{37}SiH(CH_3)_2$ | | | $C_{18}H_{37}SH$ | |
| *% massique de plastifiant* | 21,5 | 27,7 | 100 | 17,0 | 100 |

Les propriétés thermiques de chacun de ces élastomères ou de ces mélanges, ont été analysées par DSC (20°C/min), en particulier la Tg et la cristallisation des groupes pendants (I) ou des plastifiants libres dans la formulation.

Les résultats sont reportés dans les tableaux suivants :

Tableau 3

| *Nom* | TE | ESi1 | TSi1 | ESi2 | TSi2 | TPSi |
|---|---|---|---|---|---|---|
| *Tg (°C)* | -34,3 | -44,3 | -41,0 | -43,0 | -40,4 | - |
| *Enthalpie de cristallisation (J/g)* | 0 | 8,0 | 32,2 | 18,8 | 40,1 | 188,7 |
| *Température de fusion (°C)* | - | -20,2 | 17,8 | -16,6 | 19,4 | 22,5 |

Tableau 4

| *Nom* | TE | ES1 | TS1 | TPS |
|---|---|---|---|---|
| *Tg (°C)* | -34 | -39 | -39 | - |
| *Enthalpie de cristallisation (J/g)* | 0 | 0 | 33,0 | 188,7 |
| *Température de fusion (°C)* | - | - | 14,3 | 22,5 |

Le greffage des chaines alkyle en $C_{18}$ permet d'augmenter la compatibilité de ce plastifiant avec l'élastomère, en particulier de diminuer fortement la cristallisation des greffons (par rapport au plastifiant $C_{18}H_{37}Si(CH_3)_2H$ libre ou $C_{18}H_{37}SH$ libre). Le greffage du plastifiant en $C_{18}$ permet en outre une amplification ou un maintien de la chute de la Tg par rapport à ce même plastifiant libre.

Le plastifiant greffé permet :

- une augmentation de la compatibilité du plastifiant, en particulier une diminution de la cristallinité (enthalpie de fusion) du plastifiant par rapport à un plastifiant libre.
- une baisse de la Tg de l'élastomère amplifiée ou maintenue par rapport à un plastifiant libre.
- d'éviter l'exsudation des plastifiants vers l'extérieur du pneu ou vers les mélanges internes.

Les rigidités des élastomères (TE, ESi1, ESi2) et des mélanges témoins (TSi1, TSi2) ont été mesurées et les résultats sont reportés dans le tableau suivant (exprimés en base 100 par rapport au témoin) :

Tableau 5

| G*(40°C) | TE | ESi1 | TSi1 | ESi2 | TSi2 |
|---|---|---|---|---|---|
| Dilution par rapport au SBR de départ en base 100 (G*/G*TE) | 100 | 54 | 58 | 46 | 47 |

Les élastomères greffés avec un plastifiant confèrent les mêmes propriétés de plastification que le mélange témoin SBR + plastifiant libre.

Les rigidités des élastomères (TE, ES1) et de mélange témoin (TS1) ont été mesurées et les résultats sont reportés dans le tableau suivant (exprimés en base 100 par rapport au témoin) :

Tableau 6

| G*(40°C) | TE | ES1 | TS1 | |
|---|---|---|---|---|
| Dilution par rapport au SBR de départ en base 100 (G*/G*TE) | 100 | 74 | 52 | |

Les élastomères greffés avec un plastifiant confèrent des propriétés de plastification.

## Revendications

1. Pneumatique comprenant une composition de caoutchouc comprenant un élastomère diénique substitué, **caractérisé en ce que** ledit élastomère diénique substitué comprend des unités portant un radical A- B, dans lequel :

   - A représente un radical aliphatique en $C_3$-$C_{35}$, pouvant être interrompu par un ou plusieurs hétéroatome(s)
   - B représente un radical hydrocarboné linéaire, ramifié ou cyclique en $C_1$-$C_6$

   A et B sont tels que la température de fusion de l'analogue, H-A-B, soit inférieure à 70°C
   et l'élastomère diénique substitué comprend de 10 à 40 % en poids dudit radical A-B, par rapport au poids total de l'élastomère.

2. Pneumatique selon la revendication 1, **caractérisé en ce que** A représente un radical en $C_{10}$-$C_{25}$, avantageusement un radical alkylène linéaire en $C_{10}$-$C_{25}$, pouvant être interrompu par un ou plusieurs hétéroatome(s).

3. Pneumatique selon l'une quelconque des revendications précédentes, **caractérisé en ce que** B représente un radical méthyle, cyclopentyle ou cyclohexyle.

4. Pneumatique selon l'une quelconque des revendications précédentes, **caractérisé en ce que** le radical A-B est lié à la chaîne de l'élastomère par l'intermédiaire d'un atome de soufre ou d'un atome de silicium.

5. Pneumatique selon l'une quelconque des revendications 1 à 4, **caractérisé en ce que** l'élastomère comprend des groupes pendants répartis le long de la chaîne de formule (1) suivante :

   $$*\text{-SiR}_1\text{R}_2\text{-A-B}$$

   avec

   - $R_1$ et $R_2$, identiques ou différents, représentant chacun un groupement alkyle en $C_1$-$C_5$, aryle en $C_6$-$C_{14}$, alkyle aromatique en $C_7$-$C_{11}$
   - A et B étant tels que définis à l'une quelconque des revendications 1 à 4;
   - *désignant un point de liaison avec la chaîne élastomère.

6. Pneumatique selon l'une quelconque des revendications 1 à 4, **caractérisé en ce que** l'élastomère comprend des groupes pendants répartis le long de la chaîne de formule (3) suivante :

*-S-A-B

avec

- A et B étant tels que définis à l'une quelconque des revendications 1 à 4;
- *désignant un point de liaison avec la chaîne élastomère.

**7.** Pneumatique selon l'une quelconque des revendications 4 à 6, **caractérisé en ce que** l'élastomère diénique substitué est obtenu par réaction d'un élastomère diénique E avec un hydrogénosilane de formule (2) H-Si$R_1R_2$-A-B, où A, B, $R_1$ et $R_2$ sont tels que définis à la revendication 5, en présence d'un catalyseur d'hydrosilylation, ou avec un thiol de formule (4) HS-A-B, où A et B sont tels que définis à la revendication 6, en présence d'un amorceur radicalaire, ledit élastomère diénique E étant l'un des polymères suivants :

(a) tout homopolymère obtenu par polymérisation d'un monomère diène conjugué ayant de 4 à 12 atomes de carbone;
(b) tout copolymère obtenu par copolymérisation d'un ou plusieurs des diènes conjugués, entre eux ou avec un ou plusieurs monomères éthyléniquement insaturés.
(c) tout homopolymère obtenu par polymérisation d'un monomère diène non conjugué ayant de 5 à 12 atomes de carbone,
(d) tout copolymère obtenu par copolymérisation d'un ou plusieurs des diènes non conjugués, entre eux ou avec un ou plusieurs monomères éthyléniquement insaturés.
(e) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone;
(f) un copolymère d'isobutène et d'isoprène (caoutchouc butyle), ainsi que les versions halogénées;
(g) le caoutchouc naturel;
(h) un copolymère oléfinique insaturé dont la chaine comporte au moins des unités monomériques oléfiniques et des unités diéniques;
(i) un mélange de plusieurs des élastomères définis de (a) à (h) entre eux.

**8.** Pneumatique selon la revendication 7, **caractérisé en ce que** le monomère diène conjugué est le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène ou le 2,4-hexadiène.

**9.** Pneumatique selon l'une quelconque des revendications 7 à 8, **caractérisé en ce que** l'élastomère diénique E est choisi parmi

- les polybutadiènes (en abrégé "BR"),
- les polyisoprènes (IR) de synthèse,
- le caoutchouc naturel (NR),
- les copolymères statistiques de butadiène, les copolymères statistiques d'isoprène, les copolymères statistiques d'éthylène-diène, plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les copolymères d'éthylène-butadiène (EBR), et
- les mélanges de ces élastomères

**10.** Pneumatique selon l'une quelconque des revendications précédentes, **caractérisé en ce que** la composition de caoutchouc comprend de 50% à 70 % en masse de l'élastomère diénique substitué tel que défini à l'une quelconque des revendications précédentes.

**11.** Pneumatique selon l'une quelconque des revendications précédentes, **caractérisé en ce que** la composition de caoutchouc comprend de 45 à 160 pce de charge renforçante.

**12.** Pneumatique selon l'une quelconque des revendications précédentes, **caractérisé en ce que** la composition de caoutchouc comprend également un deuxième élastomère diénique.

**13.** Pneumatique selon l'une quelconque des revendications précédentes, **caractérisé en ce que** la composition de caoutchouc définie à l'une quelconque des revendications précédentes compose la bande de roulement

**14.** Bande de roulement comprenant une composition de caoutchouc telle que définie dans les revendications 1 à 12.

**15.** Composition de caoutchouc comprenant un élastomère diénique substitué tel que défini à l'une quelconque des revendications 1 à 9 et au moins l'un des constituants suivants :

- un deuxième élastomère diénique ;
- une charge renforçante, et le cas échéant un agent de couplage.

## Patentansprüche

**1.** Reifen, umfassend eine Kautschukzusammensetzung, die ein substituiertes Dienelastomer umfasst, **dadurch gekennzeichnet, dass** das substituierte Dienelastomer Einheiten, die einen A-B-Rest tragen, umfasst, wobei:

- A für einen aliphatischen $C_3$-$C_{35}$-Rest, der durch ein oder mehrere Heteroatome unterbrochen sein kann, steht,
- B für einen linearen, verzweigten oder cyclischen $C_1$-$C_6$-Kohlenwasserstoffrest steht,

A und B so beschaffen sind, dass der Schmelzpunkt des Analogen H-A-B unter 70 °C liegt,
und das substituierte Dienelastomer 10 bis 40 Gew.-% des A-B-Rests, bezogen auf das Gesamtgewicht des Elastomers, umfasst.

**2.** Reifen nach Anspruch 1, **dadurch gekennzeichnet** das A für einen $C_{10}$-$C_{25}$-Rest, vorzugsweise einen linearen $C_{10}$-$C_{25}$-Alkylenrest, der durch ein oder mehrere Heteroatome unterbrochen sein kann, steht.

**3.** Reifen nach einem der vorhergehenden Ansprüche, **dadurch gekennzeichnet, dass** B für einen Methyl-, Cyclopentyl- oder Cyclohexylrest steht.

**4.** Reifen nach einem der vorhergehenden Ansprüche, **dadurch gekennzeichnet, dass** der A-B-Rest über ein Schwefelatom oder ein Siliciumatom an die Kette des Elastomers gebunden ist.

**5.** Reifen nach einem der Ansprüche 1 bis 4, **dadurch gekennzeichnet, dass** das Elastomer entlang der Kette verteilte Seitengruppen der folgenden Formel (1) umfasst:

$$*\text{-SiR}_1\text{R}_2\text{-A-B},$$

wobei

- $R_1$ und $R_2$, die gleich oder verschieden sind, jeweils für eine $C_1$-$C_{15}$-Alkylgruppe, $C_6$-$C_{14}$-Arylgruppe oder $C_7$-$C_{11}$-Alkylaromatengruppe stehen,
- A und B wie in einem der Ansprüche 1 bis 4 definiert sind,
- * einen Verknüpfungspunkt mit der Elastomerkette anzeigt.

**6.** Reifen nach einem der Ansprüche 1 bis 4, **dadurch gekennzeichnet, dass** das Elastomer entlang der Kette verteilte Seitengruppen der folgenden Formel (3) umfasst:

$$*\text{-S-A-B},$$

wobei

- A und B wie in einem der Ansprüche 1 bis 4 definiert sind,
- * einen Verknüpfungspunkt mit der Elastomerkette anzeigt.

**7.** Reifen nach einem der Ansprüche 4 bis 6, **dadurch gekennzeichnet, dass** das substituierte Dienelastomer durch Umsetzung eines Dienelastomers E mit einem Hydrogensilan der Formel (2) H-$SiR_1R_2$-A-B, wobei A, B, $R_1$ und $R_2$ wie in Anspruch 5 definiert sind, in Gegenwart eines Hydrosilylierungskatalysators bzw. mit einem Thiol der Formel (4) HS-A-B, wobei A und B wie in Anspruch 6 definiert sind, in Gegenwart eines Radikalinitiators erhalten wird, wobei es sich bei dem Dienelastomer E um eines der folgenden Polymere handelt:

(a) jedes Homopolymer, das durch Polymerisation eines konjugierten Dienmonomers mit 4 bis 12 Kohlenstoffatomen erhalten wird;
(b) jedes Copolymer, das durch Copolymerisation von einem oder mehreren der konjugierten Diene miteinander oder mit einem oder mehreren ethylenisch ungesättigten Monomeren erhalten wird;
(c) jedes Homopolymer, das durch Polymerisation eines nichtkonjugierten Dienmonomers mit 5 bis 12 Kohlenstoffatomen erhalten wird;
(d) jedes Copolymer, das durch Copolymerisation von einem oder mehreren der nichtkonjugierten Diene miteinander oder mit einem oder mehreren ethylenisch ungesättigten Monomeren erhalten wird;
(e) ein ternäres Copolymer, das durch Copolymerisation von Ethylen und einem $\alpha$-Olefin mit 3 bis 6 Kohlenstoffatomen mit einem nichtkonjugierten Dienmonomer mit 6 bis 12 Kohlenstoffatomen erhalten wird;
(f) ein Copolymer von Isobuten und Isopren (Butylkautschuk) sowie die halogenierten Versionen;
(g) Naturkautschuk;
(h) ein ungesättigtes olefinisches Copolymer, dessen Kette mindestens olefinische Monomereinheiten und Dieneinheiten umfasst;
(i) eine Mischung von mehreren der von (a) bis (h) definierten Elastomere miteinander.

8. Reifen nach Anspruch 7, **dadurch gekennzeichnet, dass** es sich bei dem konjugierten Dienmonomer um 1,3-Butadien, 2-Methyl-1,3-butadien, 2,3-Di($C_1$-$C_5$-alkyl)-1,3-butadiene, wie beispielsweise 2,3-Dimethyl-1,3-butadien, 2,3-Diethyl-1,3-butadien, 2-Methyl-3-ethyl-1,3-butadien oder 2-Methyl-3-isopropyl-1,3-butadien, ein Aryl-1,3-butadien, 1,3-Pentadien oder 2,4-Hexadien handelt.

9. Reifen nach einem der Ansprüche 7 bis 8, **dadurch gekennzeichnet, dass** das Dienelastomer E ausgewählt ist aus:

- Polybutadienen (abgekürzt "BR"),
- synthetischen Polyisoprenen (IR),
- Naturkautschuk (NR),
- statistischen Butadien-Copolymeren, statistischen Isopren-Copolymeren, statistischen Ethylen-Dien-Copolymeren, weiter bevorzugt aus der Gruppe bestehend aus Butadien-Styrol-Copolymeren (SBR), Isopren-Butadien-Copolymeren (BIR), Isopren-Styrol-Copolymeren (SIR), Isopren-Butadien-Styrol-Copolymeren (SBIR) und Ethylen-Butadien-Copolymeren (EBR), und
- Mischungen dieser Elastomere.

10. Reifen nach einem der vorhergehenden Ansprüche, **dadurch gekennzeichnet, dass** die Kautschukzusammensetzung 50 bis 70 Massen-% des substituierten Dienelastomers gemäß einem der vorhergehenden Ansprüche umfasst.

11. Reifen nach einem der vorhergehenden Ansprüche, **dadurch gekennzeichnet, dass** die Kautschukzusammensetzung 45 bis 160 phe verstärkenden Füllstoff umfasst.

12. Reifen nach einem der vorhergehenden Ansprüche, **dadurch gekennzeichnet, dass** die Kautschukzusammensetzung außerdem ein zweites Dienelastomer umfasst.

13. Reifen nach einem der vorhergehenden Ansprüche, **dadurch gekennzeichnet, dass** die Kautschukzusammensetzung gemäß einem der vorhergehenden Ansprüche die Lauffläche bildet.

14. Lauffläche, umfassend eine Kautschukzusammensetzung gemäß den Ansprüchen 1 bis 12.

15. Kautschukzusammensetzung, umfassend ein substituiertes Dienelastomer gemäß einem der Ansprüche 1 bis 9 und mindestens einen der folgenden Bestandteile:

- ein zweites Dienelastomer;
- einen verstärkenden Füllstoff und gegebenenfalls ein Kupplungsmittel.

## Claims

1. Tyre comprising a rubber composition comprising a substituted diene elastomer, **characterized in that** the said substituted diene elastomer comprises units bearing an A-B radical, in which:

- A represents an aliphatic $C_3$-$C_{35}$ radical which can be interrupted by one or more heteroatom(s)
- B represents a linear, branched or cyclic $C_1$-$C_6$ hydrocarbon radical

A and B are such that the melting point of the analogue, H-A-B, is less than 70°C and the substituted diene elastomer comprises from 10% to 40% by weight of the said A-B radical, with respect to the total weight of the elastomer.

2. Tyre according to Claim 1, **characterized in that** A represents a $C_{10}$-$C_{25}$ radical which can be interrupted by one or more heteroatom(s), advantageously a linear $C_{10}$-$C_{25}$ alkylene radical.

3. Tyre according to any one of the preceding claims, **characterized in that** B represents a methyl, cyclopentyl or cyclohexyl radical.

4. Tyre according to any one of the preceding claims, **characterized in that** the A-B radical is bonded to the chain of the elastomer via a sulfur atom or a silicon atom.

5. Tyre according to any one of Claims 1 to 4, **characterized in that** the elastomer comprises pendant groups distributed along the chain of following formula (1):

$$*\text{-SiR}_1\text{R}_2\text{-A-B}$$

with:

- $R_1$ and $R_2$, which are identical or different, each representing a $C_1$-$C_5$ alkyl, $C_6$-$C_{14}$ aryl or $C_7$-$C_{11}$ aromatic alkyl group;
- A and B being as defined in any one of Claims 1 to 4;
- * denoting a point of bonding with the elastomer chain.

6. Tyre according to any one of Claims 1 to 4, **characterized in that** the elastomer comprises pendant groups distributed along the chain of following formula (3):

$$*\text{-S-A-B}$$

with:

- A and B being as defined in any one of Claims 1 to 4;
- * denoting a point of bonding with the elastomer chain.

7. Tyre according to any one of Claims 4 to 6, **characterized in that** the substituted diene elastomer is obtained by reaction of a diene elastomer E with a hydrosilane of formula (2) H-$SiR_1R_2$-A-B, where A, B, $R_1$ and $R_2$ are as defined in Claim 5, in the presence of a hydrosilylation catalyst, or with a thiol of formula (4) HS-A-B, where A and B are as defined in Claim 6, in the presence of a radical initiator, the said diene elastomer E being one of the following polymers:

(a) any homopolymer obtained by polymerization of a conjugated diene monomer having from 4 to 12 carbon atoms;
(b) any copolymer obtained by copolymerization of one or more of the conjugated dienes with one another or with one or more ethylenically unsaturated monomers;
(c) any homopolymer obtained by polymerization of a non-conjugated diene monomer having from 5 to 12 carbon atoms;
(d) any copolymer obtained by copolymerization of one or more of the non-conjugated dienes with one another or with one or more ethylenically unsaturated monomers;
(e) a ternary copolymer obtained by copolymerization of ethylene and of an $\alpha$-olefin having from 3 to 6 carbon atoms with a non-conjugated diene monomer having from 6 to 12 carbon atoms;
(f) a copolymer of isobutene and of isoprene (butyl rubber), and also the halogenated versions;
(g) natural rubber;
(h) an unsaturated olefinic copolymer, the chain of which comprises at least olefinic monomer units and diene units;

(i) a mixture of several of the elastomers defined from (a) to (h) with one another.

8. Tyre according to Claim 7, **characterized in that** the conjugated diene monomer is 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1,3-butadiene or 2-methyl-3-isopropyl-1,3-butadiene, an aryl-1,3-butadiene, 1,3-pentadiene or 2,4-hexadiene.

9. Tyre according to any one of Claims 7 to 8, **characterized in that** the diene elastomer E is chosen from:

- polybutadienes (abbreviated to "BRs"),
- synthetic polyisoprenes (IRs),
- natural rubber (NR),
- random butadiene copolymers, random isoprene copolymers, random ethylene/diene copolymers, more preferably selected from the group consisting of butadiene/styrene copolymers (SBRs), isoprene/butadiene copolymers (BIRs), isoprene/styrene copolymers (SIRs), isoprene/butadiene/styrene copolymers (SBIRs) and ethylene/butadiene copolymers (EBRs), and
- the mixtures of these elastomers.

10. Tyre according to any one of the preceding claims, **characterized in that** the rubber composition comprises from 50% to 70% by weight of the substituted diene elastomer as defined in any one of the preceding claims.

11. Tyre according to any one of the preceding claims, **characterized in that** the rubber composition comprises from 45 to 160 phr of reinforcing filler.

12. Tyre according to any one of the preceding claims, **characterized in that** the rubber composition also comprises a second diene elastomer.

13. Tyre according to any one of the preceding claims, **characterized in that** the rubber composition defined in any one of the preceding claims makes up the tread.

14. Tread comprising a rubber composition as defined in Claims 1 to 12.

15. Rubber composition comprising a substituted diene elastomer as defined in any one of Claims 1 to 9 and at least one of the following constituents:

- a second diene elastomer;
- a reinforcing filler and, if appropriate, a coupling agent.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004035639 A1
- US 20050239639 A1
- EP 1092731 A
- EP 1554321 A
- EP 1656400 A
- EP 1954705 A
- EP 1957506 A
- FR 1350557
- WO 03016387 A
- US 6610261 B
- US 6747087 B
- WO 9637547 A
- WO 9928380 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A
- WO 0210269 A
- WO 2005087859 A
- WO 2006061064 A
- WO 2007017060 A


### Littérature non-brevet citée dans la description


- **MACOSKO CW.** Rheology : principles measurement and applications. Wiley-VCH, 1994
- *The Journal of the American Chemical Society,* Février 1938, vol. 60, 309